# EUROPEAN PATENT APPLICATION

(11) **EP 2 267 496 A1**
(43) Date of publication of application: **29.12.2010**
(21) Application number: 10165995.1
(22) Date of filing: 15.06.2010
(51) Int. Cl.: G02B 5/20, G02B 5/22

(54) **Hybrid IR filter for digital camera**

(30) Priority: 22.06.2009 KR 20090055548
(71) Applicant: Samsung Electronics Co., Ltd., Suwon-si, Gyeonggi-do 442-742 (KR)
(72) Inventor: Pyo, Sun-Hyoung, 442-742, Gyeonggi-do (KR); Kang, Byung-Kwon, 442-742, Gyeonggi-do (KR)
(74) Representative: Grünecker, Kinkeldey, Stockmair & Schwanhäusser Anwaltssozietät

(57) **Abstract**

Disclosed is a hybrid Infrared Ray (IR) cut-off filter for a digital camera, which includes an absorption filter plate for absorbing infrared rays, a reflection coating layer formed on a top or bottom side of the absorption filter plate so as to reflect infrared rays, and an anti-reflection coating layer formed on the top or bottom side of the absorption filter plate opposite the reflection coating layer, so as to allow visible rays to pass through the anti-reflection coating layer. The hybrid IR cut-off filter can provide an excellent IR cut-off function even in a slim digital camera module. Also, the hybrid IR cut-off filter can prevent the image quality from being degraded due to the IR transmittance difference according to the change in the incidence angle of an incident light, thereby overcoming the problem of color difference according to the color temperature.

## Description

### BACKGROUND OF THE INVENTION

### 1. Field of the Invention

The present invention relates generally to a digital camera, and more particularly to an optical filter for cutting off Infrared Rays (IRs) in a digital camera.

### 2. Description of the Related Art

Cameras are broadly classified into an analog camera or a digital camera, depending on the method of storing photographed images. The analog camera uses silver-salt film, which is exposed to an image formed through a lens and is developed in a darkroom. The image is printed on a sheet of photographic paper by using the developed silver-salt film, so that the photographed image may be viewed on the photographic paper. The image is stored and maintained in that condition without any change.

However, since the analog camera uses silver-salt films, it is impossible to identify the photographed image instantly after the photographing, and the photographed image may only be identified on a sheet of photographic paper after development and printing of the exposed film in a photo studio. In addition, if there are a number of printed still photographs, it is necessary to store them in a storage device such as a photograph album.

In contrast, a digital camera converts each pixel of an image, which is formed through a lens by a Charge-Coupled Device (CCD), a Complementary Metal-Oxide Semiconductor (CMOS) or the like, into an electric signal, and stores electric signals in a record media as image data.

The digital camera allows a photographed image to be confirmed at once through a display device, after the image is photographed and stored in an internal memory, and the number of images capable of being photographed can be substantially increased depending on the capacity of the internal memory. In addition, the digital camera does not require a film development and print procedure unlike a conventional analog film, and enables a photograph to be readily printed through a printer if a printed photograph is needed. Furthermore, since photographed images can be conveniently stored through a storage medium for computer data when desired, a separate photograph album is not needed. Recently, a demand for digital cameras has significantly increased as compared to that for analog cameras, due to the above-mentioned advantages of digital cameras.

In addition, due to development of semiconductor technologies and an increase of a demand for integrated multimedia devices, electronic appliances, such as a digital camera integrated mobile phone, a digital camera integrated notebook computer or a digital camera integrated Motion Pictures Experts Group (MPEG) Layer Audio 3 (MP3) player, have become largely popular.

The digital camera is provided with an image sensor employing an image capture device, such as CMOS or a CCD, for capturing an image of an object in the manner of a silver-salt film for a conventional analog camera. A silver-salt film is adapted to react only with light in a Visible Ray band area (VR band light) among light incident through a lens. However, since an image sensor of a digital camera unnecessarily reacts with light in an Infrared Ray band area (IR band light) as well as the VR band light, a problem occurs in that the image sensor weakens in the capability of reproducing the original colors of an object. In order to obviate this problem, an IR cut-off filter is employed which cuts off IR band light incident into the image sensor through the lens.

In general, there are two types of IR cut-off filters, i.e. a reflection-type and an absorption-type. The reflection-type cut-off filter is fabricated by providing optical coating for reflecting IR band light on a transparent plate. Consequently, the reflection-type cut-off filter cuts off incident infrared rays by transmitting VR band light incident into the filter, and reflecting IR band light incident into the filter. The absorption-type IR cut-off filter is fabricated by incorporating specific additives such as Phosphorus Pentoxide (P₂O₅) or Cupric Oxide (CuO) in a transparent plate such as plate glass. The absorption-type cut-off filter cuts off infrared rays by absorbing IR band light.

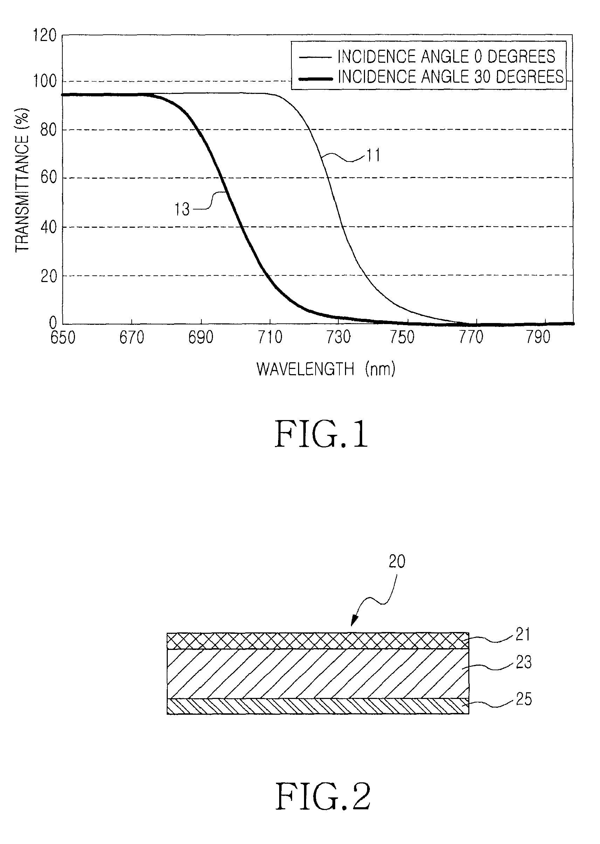

FIG. 1 illustrates the variation of transmission coefficient in accordance with the incidence angle of light incident into a conventional reflection-type IR cut-off filter. As shown in FIG. 1, reference numeral 11 indicates the transmission coefficient when the incidence angle of the light incident into the reflection-type IR cut-off filter is 0 degrees, and reference numeral 13 indicates the transmission coefficient when the incidence angle of the light incident into the IR cut-off filter is 30 degrees.

In general, a reflection-type IR cut-off filter reflects IR band light and has an excellent IR cut-off capability on a thin plate glass since it is provided with optical coating on a transparent plate. However, it is noted from FIG. 1 that the filter has a characteristic of changing its transmission coefficient according to each wavelength when the incidence angle of light incident into the filter is changed.

Such a phenomenon is caused because there is a large difference between the incidence angles at the central area and the marginal area of the filter when light passes through a reflection IR cut-off filter provided in a digital camera, and light arriving at the central area of the image sensor contains more IR-band light as compared to that arriving at the marginal area of the image sensor. Thus, the characteristics of the light arriving at the central area of the image sensor and the light arriving at the marginal area of the image sensor will be different from each other, causing a color deviation between the central area and the marginal area of an image output through the image sensor. Consequently, a color difference between the central area and the marginal area will occur, even if the same color is photographed.

For convenience purposes, portable terminals such as a mobile phone are manufactured in a compact and ultra-thin shape. As a result, a camera module incorporated in such a portable terminal should be also miniaturized. To do so, it is necessary to design the camera module such that a lens and an image sensor, which are provided in the camera module, are positioned close to each other, which means that an angle by which the light arriving at the image sensor is bent while passing through the marginal area of the lens, i.e. the incidence angle of the light is increased. As a result, there will be an increased difference between the incidence angle (0 degrees) of the light passing through the center of an IR cut-off filter positioned between the lens and the image sensor, and the incident angle of the light passing through the marginal area of the sensor.

However, as the camera module becomes more miniaturized as described above, the difference between the incidence angles will be increased according to the position of the IR cut-off filter, which results in a color difference over the entire image captured by the image sensor, causing the deterioration of image quality. The image quality deterioration problem is more embossed visually in an image sensor with a high resolution capability. Recently, there has been an increased need for a mobile hand set to be equipped with a high mega pixel camera module which is not inferior to an exclusive digital camera. Accordingly, there is a problem in that as a camera module has become smaller and improved in performance, image quality is more seriously deteriorated due to IR transmittance difference, which is caused by the above-mentioned difference of incidence angles.

Meanwhile, the absorption-type IR cut-off filter cuts off infrared rays passing through the filter by adding one or more additives, such as P₂O₅ or CuO so as to absorb infrared rays. Unlike a reflection-type IR cut-off filter, an absorption-type IR cut-off filter has an IR cut-off characteristic which is irrespective of an incidence angle. However, the absorption-type filter has a problem in that if the concentration of additives added to a glass substrate is high, the filter becomes fragile, and when the filter is exposed to air, it is easily oxidized to such an extent that oxide is formed on its surface. In order to make the absorption-type filter have a proper IR absorption characteristic with a lower concentration of additives, it is necessary to increase the thickness of the filter, which is unfavorable for miniaturization and increases the manufacturing costs.

### SUMMARY OF THE INVENTION

Accordingly, the present invention has been made to solve the above-mentioned problems occurring in the prior art, and the present invention provides a hybrid IR cut-off filter, which is applicable to a compact digital camera and can prevent the image quality from being degraded due to the IR transmittance difference according to the change in the incidence angle of an incident light.

In addition, the present invention provides an absorption-type hybrid IR cut-off filter for a digital camera which can be manufactured in a compact size while reducing the concentration of additives added to the filter.

In accordance with the present invention, there is provided a hybrid IR cut-off filter for a digital camera, including an absorption filter plate for absorbing infrared rays, a reflection coating layer formed on a top or bottom side of the absorption filter plate so as to reflect infrared rays, and an anti-reflection coating layer formed on the top or bottom side of the absorption filter plate opposite the reflection coating layer, so as to allow visible rays to pass through the anti-reflection coating layer.

The absorption filter plate may contain Phosphorus Pentoxide (P₂O₅) or Cupric Oxide (CuO) as the additive. In addition, the reflection coating layer may contain Silicon Dioxide (SiO₂) or Titanium Dioxide (TiO₂). Moreover, the transmittance difference between infrared rays incident to the hybrid IR cut-off filter at 0 degrees and 30 degrees is 10% (the difference in transmittance integration value for the 580 to 1100 nm wavelength band is 10%) or less.

In addition, the visible ray transmittance for the absorption filter plate is 80% or more, and the IR transmittance is 30% or less. In addition, the visible ray transmittance for the anti-reflection coating layer is 95% or more, and the IR transmittance is lower than the visible ray transmittance. Moreover, the visible ray transmittance for the reflection layer is 80% or more, and the transmittance for light with a wavelength in the range of 750 to 850 nm is not more than 1%.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates a transmittance difference according to incidence angles for a conventional reflection-type IR cut-off filter;
FIG. 2 illustrates a cross-sectional view of a hybrid IR cut-off filter according to the present invention;
FIG. 3 illustrates transmittance versus wave length of a reflection coating layer 21 according to the present invention;
FIG. 4 illustrates transmittance versus wave length of an absorption filter plate 23 according to the present invention;
FIG. 5 illustrates transmittance versus wave length of a anti-reflection coating layer later 25 according to the present invention;
FIG. 6 illustrates transmittance versus wave length of incidence light for the entirety of a hybrid IR cut-off filter according to the present invention;

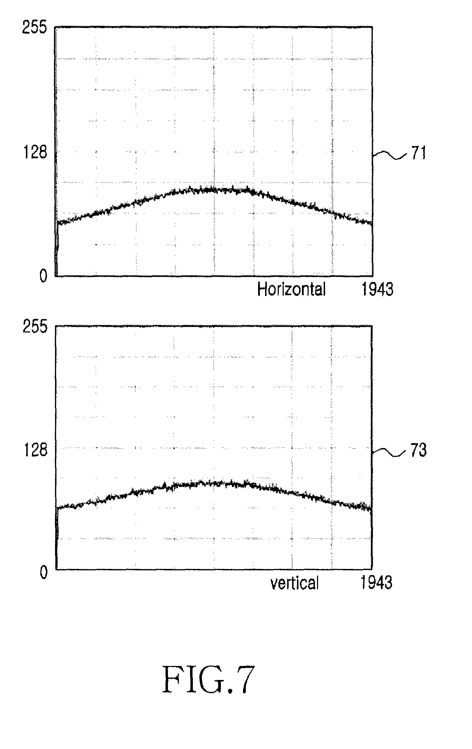

FIG. 7 illustrates a test screen obtained after white balancing (or Red, Green Blue (RGB) balancing) according to the position of a photographed image when an object of a single color with a standard color temperature of 5100K is photographed and fully filled in the screen, in a hybrid IR cut-off filter in which the transmittance difference of IR band is 13% (the difference in the transmittance integration value for the 580 to 1100 nm wavelength band is 13%) for the incident rays having an incidence angle difference of 30 degrees with respect to the vertical line, according to the present invention;
FIG. 8 illustrates a white balance test screen after photographing of an object at a lower color temperature of 3100K under the state in which white balance is evenly set for the entirety of the screen at the temperature of 5100K using the hybrid IR cut-off filter in FIG. 7;
FIG. 9 illustrates a screen obtained by photographing an object of a single color at a lower color temperature of 3100K of FIG. 8;
FIG. 10 illustrates a test screen obtained after white balancing (or RGB balancing) according to the position of a photographed image when an object of a single color with a standard color temperature of 5100K is photographed and fully filled in the screen by using an IR cut-off filter in which the transmittance difference of IR band is 10% (the difference in the transmittance integration value for the 580 to 1100 nm wavelength band is 10%) for the incident rays having an incidence angle difference of 30 degrees with respect to the vertical line, according to the present invention;
FIG. 11 illustrates a white balance test screen after photographing of an object at a lower color temperature of 3100K under the state in which white balance is evenly set for the entirety of the screen at the color temperature of 5100K using the hybrid IR cut-off filter in FIG. 10;
FIG. 12 illustrates a screen obtained by photographing an object of a single color at a lower color temperature of 3100K of FIG. 11; and
FIG. 13 illustrates the transmittance difference between infrared rays having an incidence angle difference of 30 degrees with respect to the vertical line in a hybrid IR cut-off filter employing 20 or more reflection coating layers and an absorption filter plate 23 having an IR transmittance exceeding 30%, according to the present invention.

### DETAILED DESCRIPTION OF EMBODIMENTS OF THE INVENTION

Hereinafter, embodiments of the present invention will be described with reference to the accompanying drawings. In the following description, a detailed description of known functions and configurations incorporated herein will be omitted for the sake of clarity and conciseness.

The present invention discloses an IR cut-off filter for use in a digital camera, which has an ultra slim thickness capable of satisfying the requirement for the size-reduction of a digital camera module, to solve the problem of oxidation on the filter surface due to additives used in the absorption filter, improve the reliability against the breaking (brittleness) of the absorption filter due to the additives put into the absorption filter, and reduce the IR transmittance difference depending on the incidence angle so as to achieve a high quality image.

FIG. 2 illustrates a cross-sectional view of a hybrid IR cut-off filter according to the present invention. As shown in FIG. 2, the inventive hybrid IR cut-off filter 20 includes an absorption filter plate (or a blue filter) 23, an IR reflection coating layer (or a low pass filter coating layer) 21 formed on a top or bottom side of the absorption filter plate 23, such as on the illustrated top side of the absorption filter plate 23, and an anti-reflection coating layer (or a broadband anti-reflection coating layer) 25 formed on the top or bottom side of the absorption filter plate 23 opposite the reflection coating layer 21, such as on the illustrated bottom side of the absorption filter plate 23.

The reflection coating layer 21 may be made from TiO₂ and SiO₂, and may include either a single layer made from the same material or sequentially coated multiple layers made from different materials. In addition, the absorption plate 23 may be formed by adding one or more additives to a transparent plate such as a glass plate. The additives put into the absorption plate 23 may include P₂O₅ or CuO. The anti-reflection coating layer 25 adjusts the refractive index of each medium at the interface between different types of media so as to prevent reflection of light in a predetermined wavelength band and improve the transmittance for the light in the predetermined wavelength band. The anti-reflection coating layer 25 may made from, for example, Magnesium Fluoride (MgF₂), or a type of fluoropolymer.

The hybrid IR cut-off filter 20 may be arranged between a lens and an image sensor in a digital camera, for example. An incidence light having passed through the lens is first incident to the reflection coating layer 21. Among the incidence light incident to the reflection coating layer 21, a part of IRs is reflected by the reflection coating layer 21, and the remainder thereof is transmitted through the reflection coating layer 21. The incidence light transmitted through the reflection coating layer 21 is then incident to the absorption filter plate 23. Then, a part of the incidence light incident to the absorption plate 23 is absorbed by the additives added to the absorption filter plate 23, and the other part of the incidence light passes through the absorption filter plate 23. In addition, the incidence light having passed through the absorption filter plate 23 is finally incident to the anti-reflection coating layer 25. Most of the incidence light incident to the anti-reflection coating layer 25, which corresponds to the visible-band, passes through the anti-reflection coating layer 25 and reaches the image sensor, whereas the IRs in the incidence light is reflected without passing through the anti-reflection coating layer 25.

As described above, the present invention implements a hybrid IR cut-off filter employing an absorption filter plate, so that it is possible to achieve an effect of partially cutting off IRs only with the reflection coating layer 21. However, the reflection coating of the reflection coating layer 21 shows a difference in the transmittance according to the incidence angle of the light corresponding to IR band. Moreover, when the transmittance difference exceeds a predetermined level (for example, 10% or more), the image quality may be degraded even to a level in which the degradation is visually recognizable by a user. Therefore, the present invention employs the absorption filter plate 23, which shows a difference in the transmittance according to incidence angle through a combination with the reflection coating layer 21 and the anti-reflection coating layer 25. Accordingly, the present invention can significantly reduce the difference in the transmittance according to incidence angle over the entirety of the hybrid IR cut-off filter.

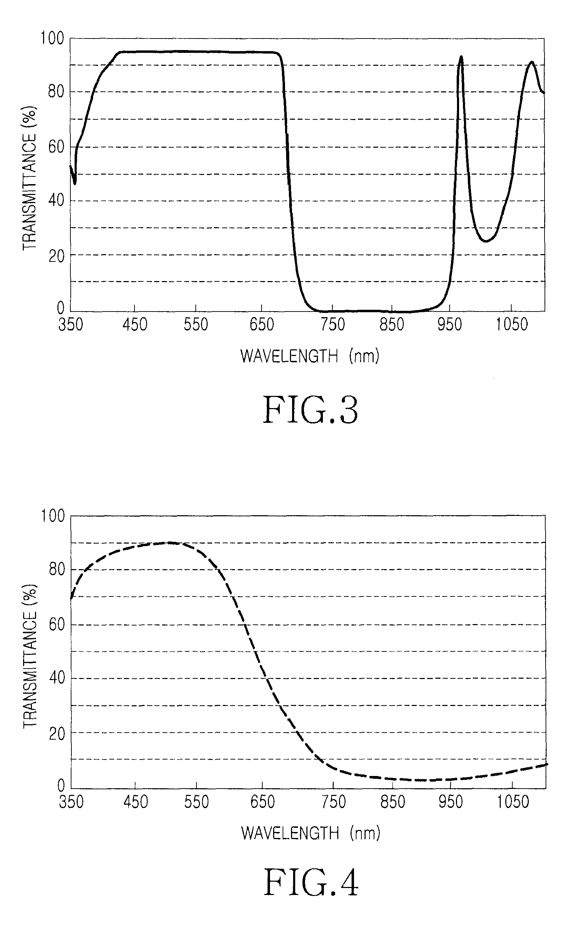

FIG. 3 illustrates the transmittance according to the wavelength of white light when the white light is incident to the reflection coating layer of the inventive IR cut-off filter. In FIG. 3, the horizontal axis indicates the wavelength of light incident to the reflection coating layer 21, and the vertical axis indicates the transmittance for the incidence light incident to the reflection coating layer 21. As shown in FIG. 3, it can be seen that the transmittance for the incidence light in the visible-band (in the wavelength band of about 400 to 700 nm) is maintained at 90% or more, and the transmittance for the incidence light of the IR band in the wavelength band of about 700 to 950 nm is sharply reduced and approximates 0%.

The reflection coating layer 21 may be made from TiO₂ and SiO₂, and may include either a single layer or multiple layers made from the same material or multiple layers made from different materials. By adjusting physical quantities such as material, thickness, the number of layers, and refractive index, it is possible to select the wavelength band of the light, which is reflected by the reflection coating layer 21 without passing through the reflection coating layer 21.

FIG. 4 illustrates the transmittance according to the wavelength of white light when the white light is incident to the absorption filter plate 23 of the inventive IR cut-off filter. In FIG. 4, the horizontal axis indicates the wavelength of light incident to the absorption filter plate 23, and the vertical axis indicates the transmittance for the incidence light incident to the absorption filter plate 23. It is noted from FIG. 4 that the transmittance for the incidence light in the wavelength band of 400 to 550 nm is maintained at 85% or more, whereas the transmittance for the incidence angle in the wavelength band of 550 to 750 nm is gradually reduced.

The absorption filter plate 23 may be formed by adding one or more additives in a transparent plate. The additives may be P₂O₅ or CuO, for example. If light is incident to the absorption filter plate 23, the light with a wavelength corresponding to the IR band is absorbed by the additives, and the light out of the IR band is transmitted through the absorption filter plate 23 without being absorbed. With this process, the absorption filter plate 23 serves as a filter for the IR band light.

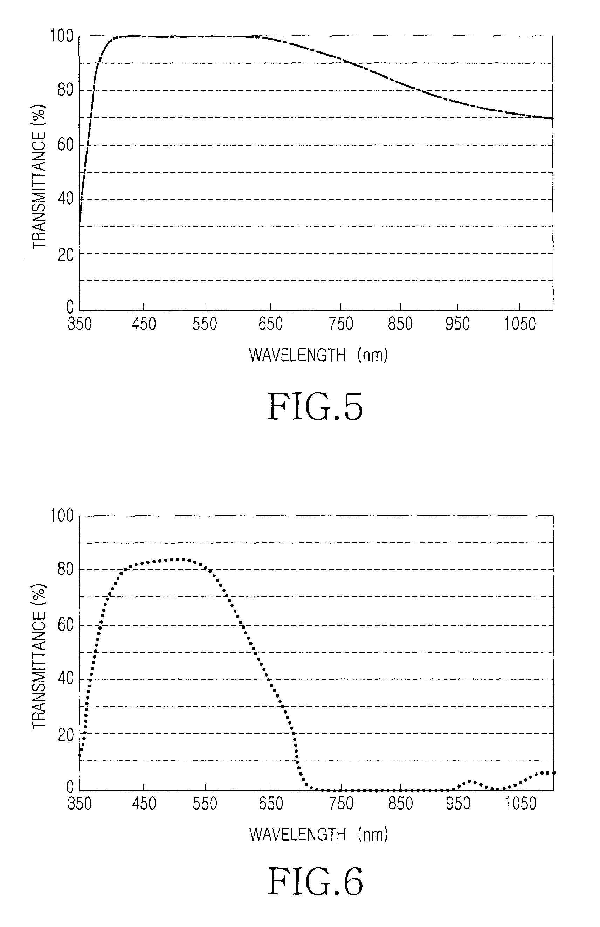

FIG. 5 illustrates the transmittance according to the wavelength of white light when the white light is incident to the anti-reflection coating layer 25 of the inventive IR cut-off filter. In FIG. 5, the horizontal axis indicates the wavelength of light incident to the anti-reflection coating layer 25, and the vertical axis indicates the transmittance for the incidence light incident to the anti-reflection coating layer 25. It is noted from FIG. 5 that the transmittance for the incidence light in the wavelength band of 400 to 550 nm is maintained nearly at 100%, and the transmittance for the incidence angle in the wavelength band of 650 nm or more is gradually reduced.

The anti-reflection coating layer 25 is formed at the interface between different media, so as to prevent the light in a predetermined wavelength band, which has passed through the first medium, from being reflected by the second medium and to allow transmission of the light through the second medium. That is, the anti-reflection coating layer 25 is formed at the interface between different media, so as to improve the transmittance for the light of the predetermined wavelength band.

FIG. 6 illustrates the transmittance according to the wavelength of white light after the white light is incident to the inventive hybrid IR cut-off filter including the reflection coating layer 21, the absorption filter plate 23 and the anti-reflection coating layer 25 formed in sequence.

In FIG. 6, the horizontal axis indicates the wavelength of the light incident to the hybrid IR cut-off filter 20, and the vertical axis indicates the transmittance for the incidence light incident to the IR cut-off filter 20. It is noted from FIG. 6 that the transmittance for the incidence light in the wavelength band of 420 to 560 nm is maintained at 80% or more, and the transmittance for the light in the wavelength band of 560 to 710 nm is gradually reduced, and the transmittance for the incidence light in the wavelength band of 710 nm or more approaches 0%.

During the three-step IR cut-off process of the hybrid IR cut-off filter, the first cut-off step for IRs is implemented by the reflection coating layer 21. With the cut-off by the reflection coating layer 21, the light of virtually the entire wavelength band in the visible light band (with a wavelength of about 400 to 700 nm) is transmitted and the IR band light is reflected and is cut off depending on the degree of coating.

According to an embodiment, it is desired that the transmittance of the visible light band through the reflection coating layer should be 80% or more, and the transmittance of the light in the wavelength band of 750 to 850 nm should be 1% or less.

The second cut-off step is implemented by the absorption filter plate 23. Among the light which has been transmitted through the reflection coating layer 21, the absorption filter plate 23 allows the light in the visible light band to be transmitted, and absorbs the light in the IR band, whereby the absorption filter plate 23 serves to cut off the IR band light.

The third cut-off step is implemented by the anti-reflection coating layer 25. The anti-reflection coating layer 25 prevents the visible band light, which has been transmitted through the absorption filter plate 23, from being reflected by the interface between the absorption filter plate 23 and the anti-reflection coating layer 25 and returning to the absorption filter plate 23. After the light having passed through the absorption filter plate 23 is incident to the anti-reflection coating layer 25, almost all the visible band light is transmitted but the transmittance of the IR band light is reduced.

According to an embodiment of the present invention, it is desired that the transmittance of the visible light band through the anti-reflection coating layer 25 should be 95% or more, and the transmittance of the IR band should be lower than that of the visible light band.

It is noted from FIG. 6 that the IR band light incident to the three-stage hybrid IR cut-off filter is substantially cut off through absorption or reflection while it sequentially passes through the respective layers of the cut-off filter. Preferably, the transmittance of the incidence light with a wavelength in the range of 700 to 900 nm through the hybrid IR cut-off filter should be 1% or less.

According to an embodiment of the present invention, for light with an incidence angle of 0 degrees (incident to the hybrid IR cut-off filter perpendicularly in the direction of a normal line of the IR cut-off filter) and light with an incidence angle of 30 degrees (incident to the hybrid IR cut-off filter at 30 degrees with respect to the normal line of the IR cut-off filter), the transmittance difference of infrared rays through the hybrid IR cut-off filter 20 is preferably set to 10% (the difference in transmittance integration value for the 580 to 1100 nm wavelength band is 10%) or less.

The transmittance difference according to the incidence angle can be tuned by combining the IR band transmittance according to the wavelength of incidence light for the IR reflection coating layer 21 and the absorption filter plate with the IR band transmittance according to the wavelength of incidence light for the anti-coating layer 25. The IR transmittance difference according to the incidence angle for the IR cut-off filter generates a so-called RGB shade graph phenomenon in which RGB deviation occurs at a marginal area of a photographed frame according to the variation of color temperature. According to this phenomenon, when a single-color light in a full screen is photographed by a digital camera provided with an IR cut-off filter with an IR band transmittance difference exceeding 10% for the rays with incidence angles of 0 degrees and 30 degrees, the central area and the marginal area of the photographed frame are viewed with different colors visually recognizable by a user, which degrades the image quality. Therefore, in order to maintain the quality of a photographed image, it is preferred that the hybrid IR cut-off filter is set to have a transmittance difference of IR band, which does not exceed 10%, for the incident rays having an incidence angle difference of 30 degrees with respect to the vertical line.

FIGs. 7 to 12 are views comparing the difference in the image quality through color temperature variation tests when the transmittance difference of IR band for the hybrid IR cut-off filter does not exceed 10% and exceeds 10%, respectively, for the incident rays having an incidence angle difference of 30 degrees with respect to the vertical line.

FIG. 7 illustrates a test screen obtained after white balancing (or RGB balancing) according to the position of a photographed image when an object of a single color with a standard color temperature of 5100K is photographed and fully filled in the screen, when the transmittance difference of IR band is 13% (the difference in the transmittance integration value for the 580 to 1100 nm wavelength band is 13%) for the incident rays having an incidence angle difference of 30 degrees with respect to the vertical line in the inventive IR cut-off filter having the three-stage structure as shown in FIG. 2.

In FIG. 7, the abscissa in the upper graph 71 indicates horizontal positions of a photographed image, and the ordinate indicates magnitudes for respective RGB colors (0 to 256). In the lower graph 73, the abscissa indicates vertical positions of a photographed image, and the ordinate indicates magnitudes for respective RGB colors (0 to 256).

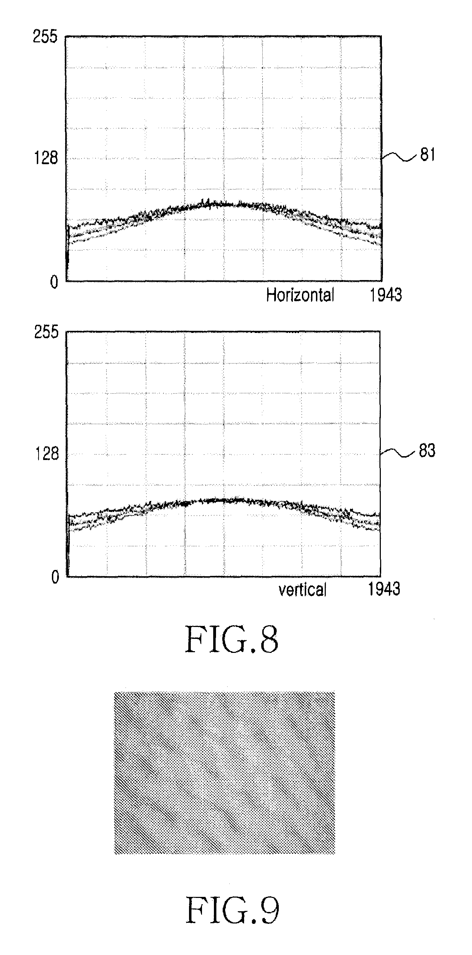

FIG. 8 illustrates a white balance test screen after photographing of an object at a lower color temperature of 3100K under the state in which white balance is evenly set for the entirety of the screen at the standard color temperature of 5100K using the hybrid IR cut-off filter in FIG. 7.

In FIG. 8, the abscissa in the upper graph 81 indicates horizontal positions of a photographed image, and the ordinate indicates magnitudes for respective RGB colors (0 to 256). In the lower graph 83 also, the abscissa indicates vertical positions of a photographed image, and the ordinate indicates magnitudes for respective RGB colors (0 to 256). In the image photographed at the lower color temperature of 3100K, the difference in the magnitude for each of the RGB colors is larger in the marginal area of the image than in the central area thereof, so that the white balance is more uneven in the direction from the central area of the photographed image toward the marginal area thereof. When the white balance is uneven over the entirety of the screen as described above, the unevenness may directly cause degradation in the quality of the photographed image, as noted from FIG. 9.

FIG. 9 illustrates a screen obtained by photographing an object of a single color at a lower color temperature of 3100K and fully filling the object in the screen under the state in which white balance is evenly set for the entirety of the screen at the standard color temperature of 5,100K using the hybrid IR cut-off filter in FIG. 7.

As noted from FIG 9, the red color is more conspicuous in the central area than in the marginal area, and the central area and the marginal area are viewed with different colors. That is, when the incidence angle difference with respect to the vertical line is 30 degrees and the difference in the transmittance of the IRs is 13 %, application of the value set for the light of 5100K to the light of 3100K allows a user to clearly and visually identify the color difference between the central area of the screen and the marginal area thereof, because the light of 3100K, which is the lower color temperature, includes more IR band rays than the light of 5100K, which is the higher color temperature. When the white balance has been set for the light with a color temperature of 5100K, and when an object of 3100K including more IR band rays is photographed, the RGB shade graph phenomenon becomes more severe, so as to cause the white balance value of the photographed screen to be uneven and yield a color difference in the screen.

Further, the band in which the image sensor used in a digital camera is sensitive to light is different from the band in which human eyes are sensitive to light. The color deviation according to the color temperature is also one of the factors due to the difference in the bands in which an object is sensitive to light. Therefore, a color deviation compensating for reducing such a difference is performed at the time of manufacturing a digital camera, in order to express an image more natural to human eyes. The color deviation compensating according to the color temperature is usually performed by software. However, there is a technical limit in reproducing the same color as that of the object actually viewed by human eyes. Moreover, the color deviation compensating is only applicable to a still image and is not applicable to a dynamic image. Therefore, instead of the color deviation compensating using software, an IR cut-off filter according to the present invention may be used to cut off the infrared rays, which are undesired in an image of a photographed object, thereby obtaining a more reliable image with a higher image quality.

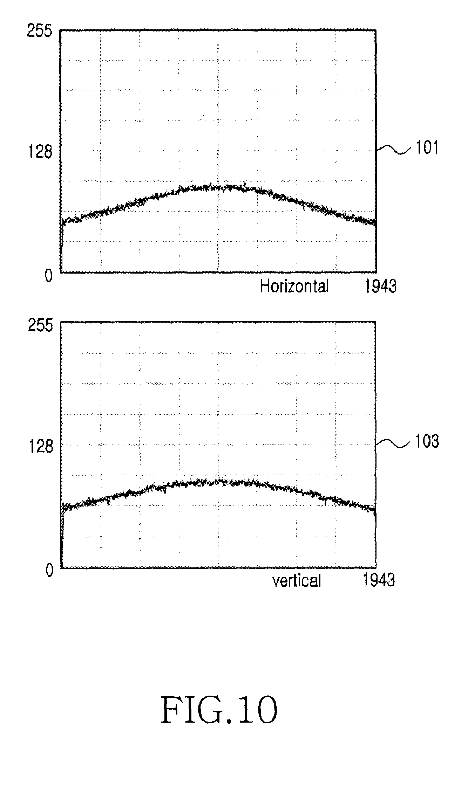

FIG. 10 illustrates a test screen obtained after white balancing (or RGB balancing) according to the position of a photographed image when an object of a single color with a standard color temperature of 5100K is photographed and fully filled in the screen by using an IR cut-off filter according to an embodiment of the present invention in which the transmittance difference of IR band is 10% (the difference in the transmittance integration value for the 580 to 1100 nm wavelength band is 10%) for the incident rays having an incidence angle difference of 30 degrees with respect to the vertical line.

In FIG. 10, the abscissa in the upper graph 101 indicates horizontal positions of a photographed image, and the ordinate indicates magnitudes for respective RGB colors (0 to 256). In the lower graph 103, the abscissa indicates vertical positions of a photographed image, and the ordinate indicates magnitudes for respective RGB colors (0 to 256).

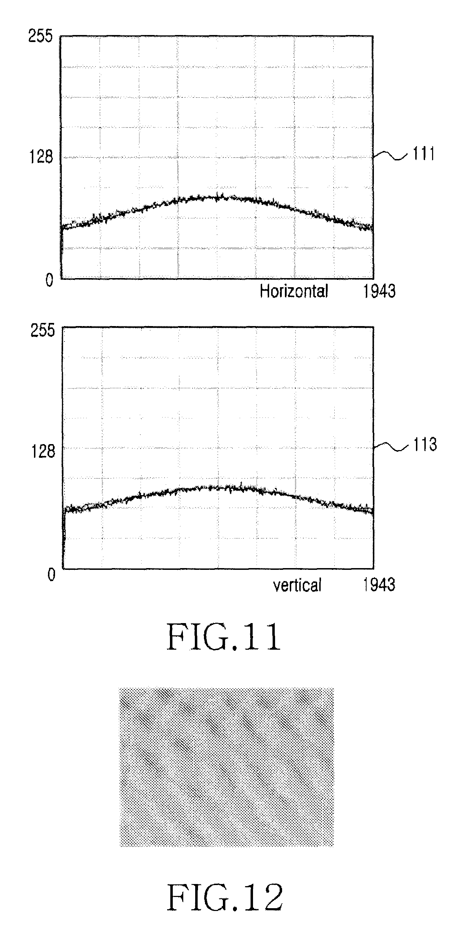

FIG. 11 illustrates a white balance test screen after photographing of an object at a lower color temperature of 3100K under the state in which white balance is evenly set for the entirety of the screen at the standard color temperature of 5100K using the hybrid IR cut-off filter in FIG. 10.

In FIG. 11, the abscissa in the upper graph 111 indicates horizontal positions of a photographed image, and the ordinate indicates magnitudes for respective RGB colors (0 to 256). In the lower graph 113, the abscissa indicates vertical positions of a photographed image, and the ordinate indicates magnitudes for respective RGB colors (0 to 256). In the image photographed at the lower color temperature of 3100K, it is noted that the white balance is evenly maintained in the marginal area of the photographed image toward the central area thereof. That is, the color deviation according to the change in the color temperature, when the incident rays having an incidence angle difference of 30 degrees with respect to the vertical line have a transmittance difference of 10%, is much smaller than the color deviation according to the change in the color temperature when the incident rays having an incidence angle difference of 30 degrees with respect to the vertical line have a transmittance difference of 13% as described above with reference to FIGs. 7 to 9. In other words, by the reduction in the color deviation according to the change in the color temperature, it is possible to obtain a photographed image having an improved screen quality.

FIG. 12 illustrates a screen obtained by photographing an object of a single color at a lower color temperature of 3100K and fully filling the object in the screen under the state in which white balance is evenly set for the entirety of the screen at the standard color temperature of 5100K using the hybrid IR cut-off filter in FIG. 10.

As noted from FIG. 12, the screen has an improved screen quality enough to make a user identify nearly no color difference depending on the color temperature change between the central area and the marginal area of the screen, differently from the screen shown in FIG. 9.

The hybrid IR cut-off filter as described above is more useful when it is employed in an ultra slim or ultra small-sized portable apparatus, such as a mobile phone. A digital camera employed in an ultra slim or ultra small-sized portable apparatus has an Effective Focal Length (EFL), which is inevitably short due to its structural conditions. Therefore, in such a digital camera, incident rays incident to the IR filters have a large incident angle difference and thus have a large difference in the IR transmittance, which causes a significant difference in the color tone according to the change of the color temperature over the entire photographed screen. In order to reduce such a color tone difference, a software white balance compensating, which is called a "multi-shading" technique, is usually performed. However, the "multi-shading" technique cannot reduce the color tone difference enough to satisfy the user. The "multi-shading" technique is applicable to only a still image and is not applicable to a moving image. However, a hybrid IR cut-off filter according to the present invention has a small IR transmittance difference according to the incident angle difference and thus can reduce the color tone difference over the entire photographed screen. Therefore, a hybrid IR cut-off filter according to the present invention enables photographing of a still image and a dynamic image of a high screen quality without applying the software "multi-shading" technique even in a digital camera having a short EFL.

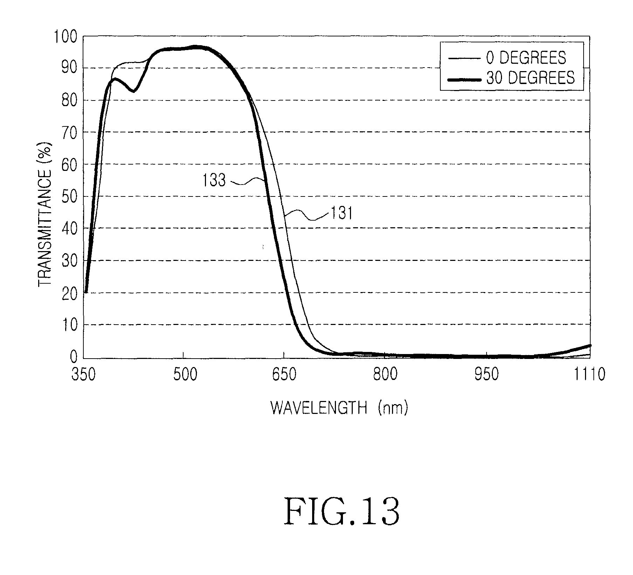

FIG. 13 illustrates the transmittance difference between infrared rays having an incidence angle difference of 30 degrees with respect to the vertical line in a hybrid IR cut-off filter employing 20 or more, reflection coating layers and an absorption filter plate 23 having an IR transmittance exceeding 30%.

As shown in FIG. 13, the hybrid IR cut-off filter shows a transmittance approaching 0% for the IR band over 720 nm in both of the cases in which the white light is incident to the hybrid IR cut-off filter at 0 degrees (as indicated by reference numeral 131) and at 30 degrees (as indicated by reference numeral 133). However, when the IR transmittance of the absorption filter plate 23 exceeds 30%, it is impossible to reduce the transmittance difference between infrared rays having an incidence angle difference of 30 degrees with respect to the vertical line to a value below 13%, and it is necessary to increase the number of optical coatings for cutting off the infrared rays, which are not sufficiently cut off. However, the increase in the number of optical coatings may increase the manufacturing cost, cause a problem in securing the reliability between the coating films, and cause the problem of screen quality degradation due to the IR transmittance difference depending on the incidence angles.

Further, if the visible ray transmittance of the absorption filter plate is lowered below 80%, the visible ray transmittance of the entire IR cut-off filter is 80% or less, which reduces the quantity of light finally incident to the image sensor and degrades the screen quality, even when the visible ray transmittance of the reflection coating layer and the anti-reflection coating layer is 100%.

Therefore, in an embodiment of the present invention, it is preferred that the absorption filter plate 23 has an IR transmittance of 30% or less and a visible ray transmittance of 80% or more. Further, by using an absorption filter plate having an IR transmittance of 30% or less and a visible ray transmittance of 80% or more, it is possible to set the IR transmittance difference between infrared rays having an incidence angle difference of 30 degrees over a hybrid IR cut-off filter to 10% or less (the difference in transmittance integration value for the 580 to 1100 nm wavelength band to 10% or less).

The present invention provides a hybrid IR cut-off filter for a digital camera, which has a three-stage structure including an absorption filter plate, a reflection coating layer, and an anti-reflection coating layer. The inventive hybrid IR cut-off filter can prevent a screen quality degradation due to the IR transmittance difference depending on the incidence angles even in a small-sized digital camera. Further, the inventive hybrid IR cut-off filter can reduce the concentration of the additives added to the absorption-type IR cut-off filter and can reduce the size of the IR cut-off filter.

While the invention has been shown and described with reference to certain embodiments thereof, it will be understood by those skilled in the art that various changes in form and details may be made therein without departing from the spirit and scope of the invention as defined by the appended claims.

## Claims

1. A hybrid Infrared Ray (IR) cut-off filter (20) for a digital camera, comprising:
an absorption filter plate (23) for absorbing infrared rays;
a reflection coating layer (21) formed on a top or bottom side of the absorption filter plate (23) so as to reflect infrared rays; and
an anti-reflection coating layer (25) formed on the top or bottom side of the absorption filter plate opposite the reflection coating layer, so as to allow visible rays to pass through the anti-reflection coating layer (25).

2. The hybrid IR cut-off filter (20) as claimed in claim 1, wherein the absorption filter plate (23) contains Phosphorus Pentoxide (P₂O₅) or Cupric Oxide (CuO) as an additive.

3. The hybrid IR cut-off filter (20) as claimed in claim 1, wherein the reflection coating layer (21) contains Silicon Dioxide (SiO₂) or Titanium Dioxide (TiO₂).

4. The hybrid IR cut-off filter (20) as claimed in claim 1, wherein the transmittance difference between infrared rays incident to the hybrid IR cut-off filter at 0 degrees and 30 degrees is 10% or less.

5. The hybrid IR cut-off filter (20) as claimed in claim 1, wherein the visible ray transmittance for the absorption filter plate (23) is 80% or more, and the infrared ray transmittance is 30% or less.

6. The hybrid IR cut-off filter (20) as claimed in claim 1, wherein the visible ray transmittance for the anti-reflection coating layer (25) is 95% or more, and the infrared ray transmittance is lower than the visible ray transmittance.

7. The hybrid IR cut-off filter (20) as claimed in claim 1, wherein the visible ray transmittance for the reflection coating layer (21) is 80% or more, and the transmittance for light with a wavelength in the range of 750 to 850 nm is 1% or less.
